**Europäisches Patentamt**

**European Patent Office**

**Office européen des brevets**

(19)

(11) Numéro de publication: **0 176 389 B1**

(12) **FASCICULE DE BREVET EUROPEEN**

(45) Date de publication du fascicule du brevet: 26.07.89

(51) Int. Cl.⁴: **H 04 N 5/217, H 04 N 5/30**

(21) Numéro de dépôt: 85401645.8

(22) Date de dépôt: 13.08.85

(54) Dispositif de correction de signaux vidéo pour système d'acquisition et d'analyse de signaux rapides utilisant une caméra à fente.

(30) Priorité: 21.08.84 FR 8413018

(43) Date de publication de la demande:
02.04.86 Bulletin 86/14

(45) Mention de la délivrance du brevet:
26.07.89 Bulletin 89/30

(84) Etats contractants désignés:
CH DE GB LI

(56) Documents cités:
EP-A- 0 094 851
US-A- 4 352 127

IEEE JOURNAL OF QUANTUM ELECTRONICS,
vol.QE-19, no. 4, avril 1983, pages 616-621, IEEE, New
York, US; R.L. KAUFFMAN et al.: "Quantitative intensity
measurements using a soft X-ray streak camera"

(73) Titulaire: THOMSON-CSF, 51, Esplanade du Général de
Gaulle, F-92800 Puteaux (FR)

(72) Inventeur: Boué, Philippe, THOMSON-CSF SCPI 173, bld
Haussmann, F-75379 Paris Cedex 08 (FR)

(74) Mandataire: Benoit, Monique et al, THOMSON-CSF
SCPI, F-92045 PARIS LA DEFENSE CEDEX 67 (FR)

## Description

La présente invention concerne un dispositif de correction de signaux vidéo délivrés par un capteur d'une caméra de télévision et, plus particulièrement, dans les systèmes où cette caméra de télévision est elle-même précédée d'une caméra à fente, tels les systèmes d'acquisition multivoies et d'analyse de signaux rapides.

On connaît par la publication de brevet français FR-A 2 525 844, un dispositif de correction des signaux fournis par le capteur d'une caméra de télévision. Ce dispositif est plus particulièrement prévu pour une caméra de télévision constituée par une matrice en circuit solide, du type dispositif à transfert de charges (D.T.C.), qui présente des inconvénients dus à ce que les divers éléments de la mosaïque détectrice correspondant chacun à un point de résolution de l'image ne se comportent pas rigoureusement de la même manière et présentent des légères différences d'un élément à un autre. En conséquence, le dispositif de correction est élaboré pour corriger les différents défauts dus à ce genre de détecteur.

En premier lieu il y a lieu de corriger la non-uniformité de réponse au noir, c'est-à-dire à éclairage nul. Pour cela l'objectif est obturé et les signaux vidéo détectés correspondants SI sont relevés, mis sous forme numérique et stockés dans une première mémoire. Lors de l'utilisation, le signal d'erreur de noir stocké dans la mémoire sera soustrait de la valeur vidéo détectée pour le point correspondant afin d'éliminer cette erreur de non-uniformité de noir. Le signal mémorisé est converti à nouveau en analogique avant d'être appliqué au soustracteur, constitué par un amplificateur différentiel ou équivalent. Les circuits correspondants comportent donc un circuit de conversion analogique-numérique qui reçoit les signaux du capteur, une première mémoire d'image pour stocker les valeurs détectées en éclairage nul point par point, un circuit de conversion numérique-analogique, et un circuit de soustraction analogique.

Un deuxième défaut éliminé par le dispositif de correction est la non-uniformité de réponse des éléments, cette non-uniformité de réponse étant prise en considération pour un éclairement uniforme déterminé qui est la valeur d'éclairement moyen pour la plage d'éclairement envisagée. La caméra de télévision est donc placée dans des conditions d'enregistrement d'une scène à éclairement uniforme moyen et les valeurs détectées sont comme précédemment relevées et un coefficient de proportionnalité est calculé pour effectuer un rattrapage et harmoniser la réponse des différents éléments de la matrice. Dans le document de brevet précité le coefficient de proportionnalité est de la forme $1/B = K/S2-S1$ où $K$ est une constante prédéterminée identique pour tous les éléments du capteur, $S1$ les signaux de noir et $S2$ les signaux à éclairage moyen uniforme. Le dispositif de correction comporte des moyens de calcul numérique qui sont couplés à la sortie du circuit de conversion analogique-numérique pour élaborer le signal $1/B$. Ces valeurs numériques de correction sont stockées dans une deuxième mémoire. Lors de l'utilisation, les valeurs $1/B$ stockées sont de même manière que précédemment transformées en analogique dans le convertisseur numérique-analogique et appliquées à un multiplicateur analogique pour effectuer la correction correspondante point par point des signaux vidéo détectés.

Un troisième défaut par le dispositif de correction est celui des défauts locaux qui se définit par le fait que la réponse vidéo de l'élément détecteur doit rester dans une plage donnée pour un éclairement donné, par exemple pour la valeur d'éclairement moyen, et si elle est située au-dessous d'une valeur minimale ou au-dessus d'une valeur maximale, ces deux valeurs délimitant la plage en question, on considérera que l'élément correspondant ne doit pas être pris en compte. Ce défaut est pris en considération dans le dispositif concerné par les moyens de calcul numérique qui vérifient que le coefficient $1/B$ est compris entre une valeur $M$ maximale et une valeur $L$ minimale. Si ces conditions ne sont pas remplies par l'élément photosensible pris en compte, cet élément est considéré comme défectueux et l'information de défaut éventuel correspondante est utilisée comme signal de validation pour la prise en compte ou non du signal vidéo du point courant à la sortie du multiplicateur. Dans le cas d'un élément défectueux, un circuit de retard dont le décalage dans le temps correspond à celui de deux points successifs d'une même ligne dans la trame d'analyse, permet de prendre en compte la valeur du signal correspondant au point précédent de manière à éliminer le défaut local constaté.

Pour l'application concernée à un système d'acquisition avec une caméra à balayage de fente, il y a d'autres défauts qui apparaissent et dont il faut tenir compte si l'on veut faire une analyse précise et fiable des signaux rapides incidents. La durée de ces signaux peut en effet être extrêmement brève, par exemple comprise entre quelques dizaines de picosecondes et quelques nanosecondes. Ces défauts complémentaires sont ceux de nonlinéarité de réponse des éléments de la matrice pour un même signal appliqué à l'entrée, ces défauts de non-linéarité englobant toute la chaîne réceptrice, et des défauts géométriques de non-linéarités spatiale et temporelle dues aux éléments de la chaîne situés en amont de la caméra de télévision.

Il y a lieu de distinguer les défauts de non-linéarité qui sont à considérer dans toute la plage de fonctionnement pour couvrir toute la dynamique du système, de ceux de non-uniformité précités qui ont été considérés pour un éclairage uniforme de valeur moyenne. Il y a lieu de noter que pour une visualisation conventionnelle d'image de télévision, la correction vidéo de non-uniformité est suffisante, celle de non-linéarité n'étant généralement pas perceptible à l'oeil. Le but de l'invention est de remédier à ces défauts complémentaires ainsi qu'aux défauts propres à l'enregistrement selon un balayage de télévision sur une caméra en circuit solide, en aménageant le dispositif de correction.

Selon l'invention revendiquée il est proposé de réaliser un système d'acquisition et d'analyse de signaux rapides, utilisant une caméra à fente précédant une caméra de télévision en circuit solide, et équipé d'un dispositif de correction du signal vidéo détecté pour corriger les défauts de non-uniformité de noir, les défauts locaux et ceux de non-uniformité de réponse; dans ce système la sortie du circuit soustracteur dans lequel s'effectue la correction de non-uniformité de noir est connectée au circuit multiplicateur dans lequel s'effectue la correction de non-uniformité de réponse à travers un convertisseur analogique-numérique qui reçoit un signal de validation des défauts locaux, la correction de non-uniformité de réponse s'effectuant en numérique dans ledit circuit multiplicateur lequel délivre par une sortie numérique le signal vidéo corrigé vers une mémoire d'image où il est stocké et que des moyens de gestion, de calcul et de mémorisation permettent d'élaborer et stocker des données de correction de défauts complémentaires représentés par les défauts de non-linéarité de réponse de la chaîne pour les différents éléments détecteurs et par des défauts géométriques de non-linéarités spatiale et temporelle dues aux éléments en amont de la caméra de télévision.

Les particularités et avantages de l'invention apparaîtront dans la description qui suit donnée à titre d'exemple, à l'aide des figures annexées qui représentent:

- Figure 1, un bloc-diagramme général d'un système d'acquisition et d'analyse de signaux rapides aménagé avec un dispositif de correction conforme à la présente invention;
- Figures 2 et 3, des schémas illustrant des défauts de nonlinéarité spatiale;
- Figures 4 et 5, des schémas illustrant des défauts de nonlinéarité temporelle;
- Figure 6, une courbe illustrant des défauts de non-linéarité de réponse;
- Figures 7 et 8, la procédure d'acquisition des données de défauts et de stockage de ces données;
- Figure 9, un diagramme des circuits de correction durant la phase d'utilisation;
- Figure 10, un schéma relatif à l'exploitation en visualisation cathodique;
- Figure 11, schéma relatif à l'exploitation avec transmission de données à distance.

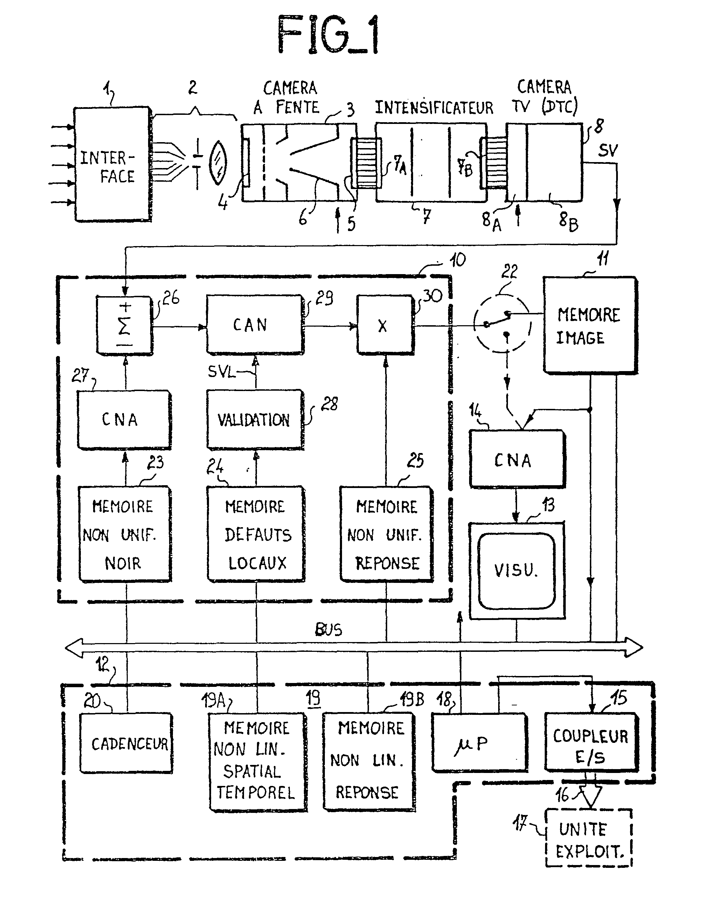

Le schéma synoptique de la figure 1 représente la structure générale du système. Le phénomène à observer, qu'il soit électrique ou optique, est appliqué à un circuit interface d'entrée 1. Cet interface élabore des signaux optiques calibrés. Ces signaux optiques sont transmis par l'intermédiaire d'une optique à fibres et d'un adaptateur optique à une caméra à balayage de fente, dite streak caméra en terminologie anglo-saxonne.

L'ensemble optique intermédiaire entre l'interface et cette caméra est référencé. 2. Il peut être constitué par un faisceau de fibres qui se termine à une extrémité selon une fente lumineuse constituée par des fibres juxtaposées linéairement; cette fente lumineuse peut être reprise ensuite par un objectif derrière un cache adapté à la configuration, ou on peut parvenir sur la caméra à fente au moyen d'une galette de fibres optiques. La solution à adopter dépend de l'équipement porté déjà par la caméra à fente. La caméra à fente 3 comporte à l'entrée une photocathode 4 et en sortie, une anode formée d'un écran fluorescent 5 et entre les deux, des grilles et des électrodes déflectrices 6. En considérant un nombre N de voies correspondant chacune à une fibre de la fente on dispose à l'entrée de N voies optiques juxtaposées selon une ligne et qui, par le biais de la déflexion vont être déplacées verticalement de manière à visualiser pour chacune de ces N voies la variation temporelle du phénomène correspondant. En sortie de la caméra à fente, le signal peut être appliqué à une caméra de télévision si le gain est suffisant, ceci peut être le cas de caméra à fente équipée avec des multicanaux. Sinon, on disposera entre la caméra à fente et la caméra de télévision un tube intensificateur d'image 7 pour accroître l'intensité lumineuse du signal. L'écran fluorescent 5 est couplé optiquement à la potocathode d'entrée 7A du tube intensificateur, ce couplage étant généralement assumé par une galette de fibres optiques. De même, la sortie de l'intensificateur 7 comporte un écran fluorescent 7B qui est couplé également par une galette de fibres à la caméra de télévision 8. Celle-ci est considérée exécutée en circuit solide avec un dispositif à transfert de charges. Elle comporte en fait une matrice en X, Y d'éléments photosensibles 8a recevant le flux lumineux de la galette optique de coulage à l'intensificateur et cette matrice est elle-même suivie de circuits de préamplification et de lecture 8b qui délivrent le signal vidéo SV analogue à celui d'un balayage du type ligne par ligne télévision.

Ce signal vidéo est transmis aux circuits de traitement 10 dans lequel il subit un certain nombre de corrections et il en sort corrigé et sous forme numérique. Les corrections subies dans le circuit sont celles indiquées précédemment et relevant de la technique connue à savoir, la correction de non-uniformité de noir, d'élimination des éléments présentant des défauts locaux, et la correction de non-uniformité de réponse des éléments de la matrice. Le signal sous forme numérique est ensuite appliqué à une mémoire d'image 11 qui peut comporter plusieurs plans images pour stocker un certain nombre d'images successives mais en nombre limité.

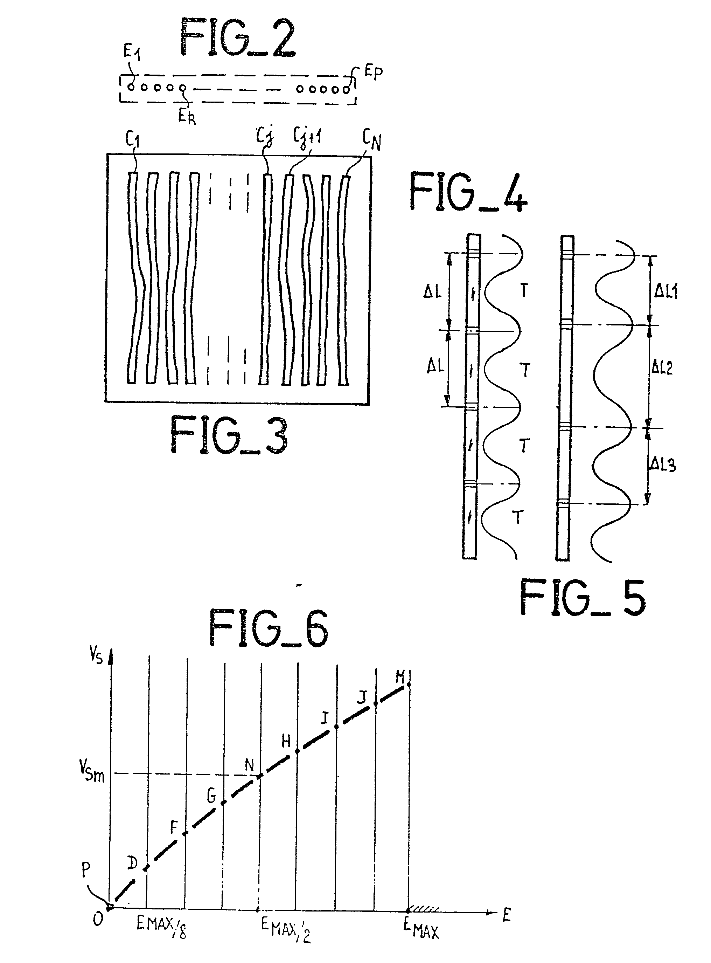

L'ensemble des deux caméras 3 et 8, ainsi que les circuits de traitement 10 et la mémoire d'image 11 sont gérés par une unité de gestion et de calcul 12. Les signaux d'image stockés peuvent être visualisés sur un moniteur 13 après conversion en analogique dans un convertisseur 14 sur commande provenant de l'unité 12. L'image ainsi visualisée comporte des corrections qui peuvent être limitées à celles effectuées dans le circuit de traitement 10. Suivant un autre mode d'utilisation les signaux sont transmis à l'extérieur à travers un coupleur entrée-sortie 15 sur un bus 16. Ils sont transmis à une unité d'exploitation annexe 17 pouvant comporter un ordinateur ou des circuits d'enregistrement complexes. Pour cette exploitation qui fait généralement appel à des notions autres que la densité ponctuelle de l'image, il est nécessaire d'introduire d'autres corrections résultant de l'utilisation de la caméra à fente et ces corrections sont élaborées à l'aide d'une unité de calcul 18, tel un microprocesseur, pour être stockées dans des mémoires vives 19; il s'agit des corrections de non-linéarités spatiale et temporelle qui vont être mises en évidence à l'aide des figures 2 à 5. L'unité 12 comporte en outre un circuit cadenceur 20. Le commutateur 22 symbolisé à la sortie du circuit 10 est relatif à une utilisation directe, pour visualiser une scène sans passer par l'intermédiaire de la mémoire d'image, dans les cas où l'on veut visualiser des images à une cadence de répétition élevée, du type télévision.

Dans les circuits de traitement 10 on a représenté 3 mémoires vives dans lesquelles on a stocké les données correspondant aux corrections à apporter respectivement, dans la mémoire 23 la non-uniformité de noir, dans la mémoire 24 les défauts locaux et dans la mémoire 25 la non-uniformité de réponse. La mémoire 23 est reliée à un circuit soustracter 26 à travers un circuit de conversion numérique-analogique 27, en sorte de soustraire en analogique la correction de noir au signal vidéo incident pour le point considéré. La sortie analogique du soustracteur 26 est transformée par échantillonnage et conversion en signal numérique dans le circuit 29, sous réserve qu'il ne s'agisse pas d'un élément photodétecteur défectueux de la matrice 8A. Dans ce cas, le circuit de décision 28 qui fournit un signal de validation SVL commande le prélèvement de la valeur antérieure. Le cicuit multiplicateur suivant 30 est un circuit multiplicateur numérique qui effectue la correction de non-uniformité de réponse; la multiplication en numérique permet d'accroître la dynamique et est plus facile à réaliser.

En se rapportant maintenant à la figure 2 on y a représenté une ligne d'éléments de la matrice composée des éléments E1, E2 à Ep, le nombre P d'éléments d'une ligne étant grand par rapport au nombre N de voies, en sorte que chacune des N voies lumineuses couvre plusieurs éléments photosensibles juxtaposés, au moins 2, et qu'il soit ménagé un espace entre deux traces successives d'enregistrement verticales $C_j, C_{j+1}$ des variations temporelles des N phénomènes lumineux appliqués à l'entrée de la caméra à fente 3. Sur la figure 3 au-dessous on a représenté ce balayage vertical qui résulte de la déflexion appliquée sur l'électrode 6 de la caméra à fente, la fente étant cosidérée de direction horizontale. On obtient ainsi N traces lumineuses, C1 à CN comme représenté sur la figure 3, laquelle montre en exagérant qu'elles ne sont pas rigoureusement rectilignes. Ces défauts de non-linéarité spatiale sont dus à des défauts de construction divers de la caméra à fente 3, ainsi que des défauts des autres éléments optiques 2 et intensificateurs 7 rajoutés dans la chaîne.

Les figures 4 et 5 sont destinées à mettre en évidence l'autre défaut concerné qui est la non-linéarité temporelle au niveau de l'enregistrement sur la caméra de télévision 8. En ce sens, la figure 4 montre la réponse idéale suivant laquelle chaque période T d'un signal périodique, par exemple une sinusoïde comme représentée, va être traduite verticalement selon des éléments successifs de même dimension $\Delta L$ sur la cible photoréceptrice.

La figure 5 montre le cas réel suivant lequel la réponse n'est pas forcément proportionnelle à la durée T compte tenu des irrégularités dans le temps du balayage et autres, ou des déformations d'optique ou autres. Par exemple, la première sinusoïde de durée réelle T est enregistrée sur une hauteur $\Delta L1$ qui est inférieure à $\Delta L$ et la deuxième sinusoïde est enregistrée sur une longueur $\Delta L2$ supérieure à $\Delta L$, etc...

Ces corrections de non-linéarités spatiale et temporelle sont menées à bien par l'unité de gestion et calcul 12 au cours d'une phase d'étalonnage préliminaire. Dans un premier temps on applique un éclairement uniforme à l'entrée de la fente et on procède grâce au microprocesseur 18 à l'analyse des données de lignes lumineuses (traces C1 à CN) stockées dans la mémoire 11 permettant d'enregistrer leurs positions respectives dans la matrice d'éléments en X, Y de la caméra 8. Ces données de position de ligne sont stockées sous forme d'une table dans la mémoire vive ou mémoire RAM 19A.

Pour faire les relevés géométriques résultant à la fois des nonlinéarités spatiale et temporelle on envoie ensuite un signal périodique, par exemple sinusoïdal, sur les N entrées et on analyse sa déformation (Fig. 5) le long de chaque ligne C; dont on connaît la position par les données précitées. Le microprocesseur 18 calcule alors un polynôme correspondant à chaque ligne et qui est stocké en 19A. Ces données de non-linéarités spatiale et temporelle sont appliquées ensuite aux données extraites de la mémoire d'image 11 lorsqu'on désire les transmettre vers une unité d'exploitation extérieure 17 pour une utilisation autre qu'une simple visualisation, de manière à effectuer les corrections de non-linéarités spatiale et temporelle correspondantes.

La figure 6 représente une courbe de réponse d'un élément détecteur de la matrice 8A, après correction dans le circuit 10 et stockage dans la mémoire d'image 11. L'élément détecteur est considéré non défectueux; la correction de noir correspond au point P où le signal corrigé est nul pour un éclairement nul; la correction de non-uniformité de réponse correspond pour l'éclairement moyen E Max/2 à une valeur déterminée

VS$_m$commune pour tous les éléments détecteurs. En fait tous les points de la courbe se trouvent multipliés par le coefficient 1/B, propre à l'élément considéré, dans le circuit multiplicateur 30. Toutes les courbes passent donc par les points P de coordonnée zéro et N de coordonnée VS$_m$ et E Max/2. Les autres points représentés tels que les points D, E, G, etc... ne sont pas forcément situés sur la droite PN étant donné que la réponse n'est pas forcément rigoureusement linéaire et les écart de non-linéarité sont à déterminer pour faire des corrections appropriées lors d'une analyse fine extérieure de l'enregistrement. Pour disposer des données correspondantes il est procédé au relevé de la courbe PM de réponse de chaque élément (plus précisément, on effectue la moyenne pour tous les éléments intervenant dans la réponse de chaque voie) et le microprocesseur 18 stocke dans une autre mémoire 19B un polynôme correspondant. Il est procédé comme suit:

– un signal d'éclairement E de valeur déterminée est appliqué sur une voie d'entrée du système puis, successivement, sur les N - 1 autres voies, l'une après l'autre, ou bien on dispose de N signaux égaux à cette valeur qui sont appliqués simultanément sur les N voies;

– cette première opération est répétée un certain nombre de fois en changeant à chaque fois la valeur du signal de manière à parcourir toute la dynamique du système dans sa plage de fonctionnement de zéro à E Max; par exemple, la plage de fonctionnement peut être couverte en considérant une répartition régulière de L valeurs distribuée avec un écart E Max/L de l'une à la suivante (sur la figure on a considéré L = 8);

– pour chaque valeur du signal d'éclairement E l'image correspondant aux N voies est stockée dans la mémoire d'image 11;

– pour chaque voie le microprocesseur 18 calcule la valeur de réponse moyenne des éléments de la ligne verticale correspondante stockée en 11 (ce calcul fait avantageusement intervenir les données de positionnement spatial des traces correspondant aux N lignes C1 à CN représentées sur la figure 3 et qui ont été déterminées au cours de l'opération de calcul des non-linéarité spatiale et temporelle décrite précédemment), on dispose ainsi de N valeurs moyennes pour les N voies pour chaque valeur d'éclairement de la forme E Max.k/L;

– les valeurs moyennes sont alors stockées successivement dans la mémoire 19B à la suite de chacune des L opération, le microprocesseur 18 calcule ensuite pour chaque voie un polynôme correspondant de la forme $a_0 + a_1x + a_2x^2 + ...$ correspondant à sa courbe de réponse et les N polynômes sont stockés dans la mémoire 19B.

Lors d'une utilisation extérieure pour analyse fine en 17, le microprocesseur 18 calcule les écarts den non-linéarité à appliquer; à cet effet pour chaque voie donnée la valeur VS détectée permet grâce au polynôme de connaître la valeur correcte d'éclairement qui lui correspond et donc de calculer l'écart de cette valeur détectée VS par rapport à la réponse linéaire idéale selon la droite PN.

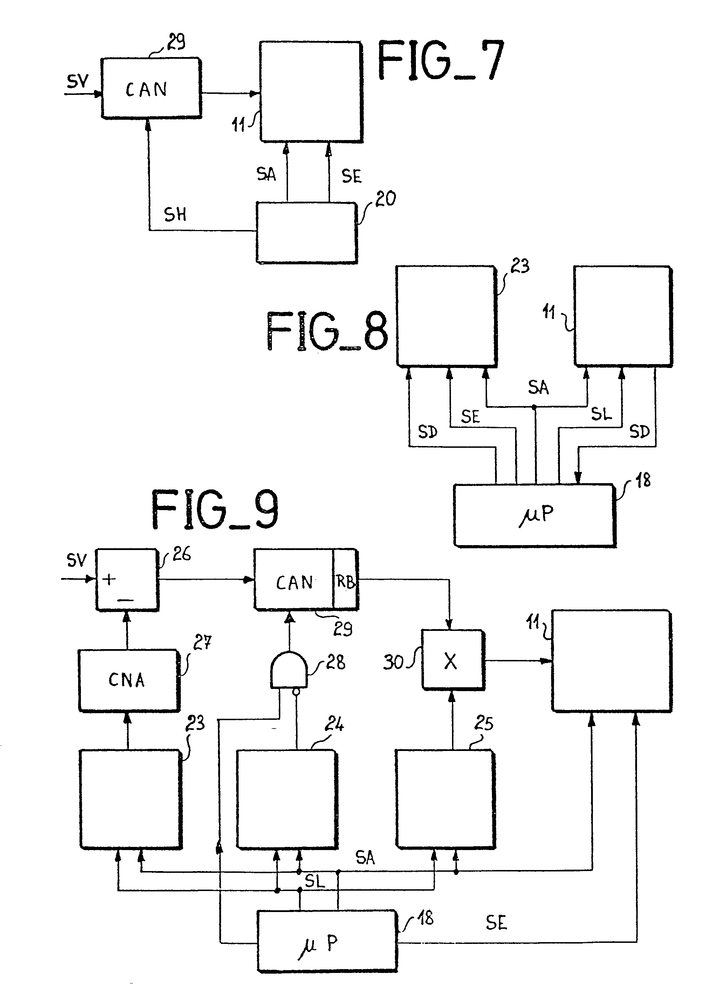

La figure 7 se rapporte au procédé d'acquisition des données à stocker dans la mémore 23, 24 ou 25, la méthode étant la même. Le signal vidéo SV lu sur la matrice détectrice 8a est appliqué au convertisseur 29 et est stocké dans la mémoire d'image 11, le cadenceur 20 fournit durant cette opération une horloge de cadencement SH au convertisseur analogique-numérique 29 et, à la mémoire d'image 11, des données d'adressage SA et de commande d'écriture SE.

La figure 8 montre le transfert des données correspondantes dans la mémoire 23, 24 ou 25 correspondante. Par exemple, si l'on a enregistré les données de non-uniformité de noir selon le processus de la figure 6, la mémoire 11 va être lue et les données transférées dans la mémoire 23 de noir. Il en est de même ensuite pour la mémoire 24 des défauts locaux et pour la mémoire 25 des défauts de non-uniformité de réponse. Dans cette structure, le microprocesseur 18 commande l'adressage SA des deux mémoires, l'écriture SE de la mémoire à remplir, la lecture SL de la mémoire 11 et le transfert des données SD de l'une à l'autre. Ce transfert de données se fait directement dans le cas du noir et après une opération de calcul en 18 dans le cas de la non-uniformité de réponse pour calculer le coefficient de proportionnalité 1/B. Dans le cas des défauts locaux le microprocesseur 18 effectue la comparaison des données stockées 11 avec des valeurs limites de variation et si elles sont en dehors de la fourchette prédéterminée, la valeur zéro est enregistrée alors que la valeur 1 sera enregistrée si la valeur est bonne c'est-à-dire comprise dans la plage tolérée pour le signal vidéo.

La figure 9 montre les connexions des circuits de traitement en utilisation courante suivant laquelle la mémoire d'image 11 se remplit après corrections selon les données stockées dans les mémoires 23, 24, et 25. Le fonctionnement est lisible sur la figure. Le circuit de décision 28 est constitué par une porte ET avec une entrée inversée. Le circuit de conversion analogique-numérique 29 comporte un registre tampon RB en sortie qui permet de prendre la valeur précédente dans le cas d'un défaut local.

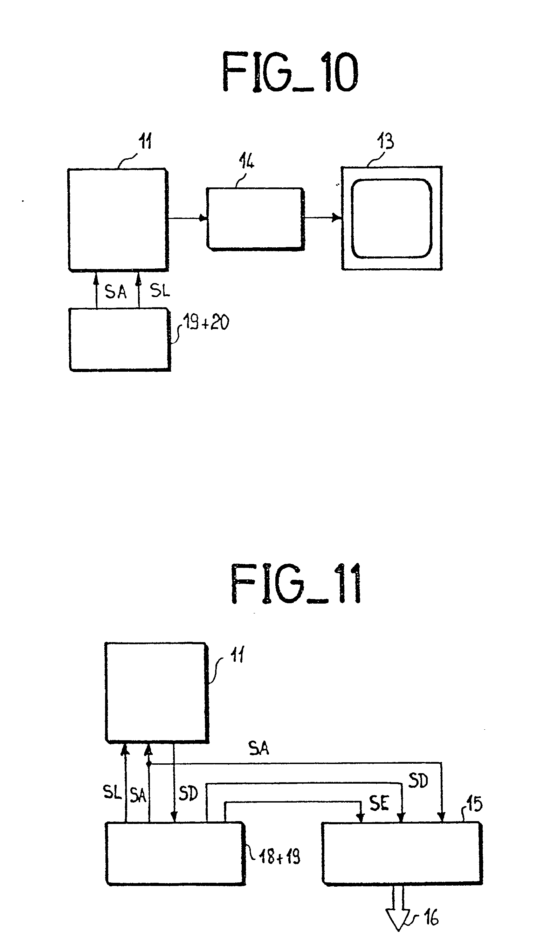

La figure 10 a trait à une exploitation en visualisation sur un moniteur cathodique 13 des données enregistrées dans la mémoire d'image 11.

La figure 11 montre le cas où ces données sont transférées à travers le coupleur 15 à un bus vers une unité d'exploitation extérieure.

Suivant un exemple de réalisation la caméra à fente pourra comporter un tube du type P 501 et la caméra de télévision être un capteur optique matriciel à transfert de charges du type TH 7861, qui fournit 576 lignes de 384 points élémentaires chacune. Le système ainsi aménagé permet d'analyser avec précision des signaux rapide dont la durée peut être comprise entre 30 picosecondes et quelques nanosecondes par exemple. Pour une exploitation différée extérieure, le coupleur E/S 15 peut être du type IEEE 488 délivrant les données sur un bus IEEE 488.

## Revendications

1. Système d'acquisition et d'analyse de signaux rapides, utilisant une caméra à fente précédant une caméra de télévision en circuit solide, et équipé d'un dispositif de correction du signal vidéo détecté, ledit signal étant transmis à un circuit de traitement comportant des moyens de conversion analogique-numérique et numérique-analogique, de mémorisation, de gestion et de calcul, de soustraction et de multiplication pour corriger les défauts de non-uniformité de noir, les défauts locaux et ceux de non-uniformité de réponse, la correction de noir s'effectuant par soustraction analogique dans un circuit soustracteur et recevant d'autre part le signal vidéo de la caméra de télévision et les données de correction de non-uniformité de noir stockées dans une première mémoire, la correction de défauts locaux s'effectuant par validation dans le cas d'un élément correct de la matrice détectrice et par prélèvement du signal correspondant à l'élément précédent si l'élément est défectueux, la correction de non-uniformité de réponse procédant par calcul d'un coefficient de proportionnalité et stockage de ces données dans une deuxième mémoire et par multiplication du terme correctif correspondant avec un signal vidéo corrigé du noir; ledit système étant caractérisé en ce que la sortie du circuit soustracteur (26) est connectée au circuit multiplicateur (30) à travers un convertisseur analogique-numérique (29) qui reçoit un signal de validation des défauts locaux stockés dans une troisième mémoire (24), la correction de non-uniformité de réponse s'effectuant en numérique dans ledit circuit multiplicateur (30) lequel délivre par une sortie numérique le signal vidéo corrigé vers une mémoire d'image (11) où il est stocké, les moyens de gestion et de calcul (12) étant utilisés pour élaborer, à partir des données stockées dans la mémoire d'image, des données pour la correction de défauts complémentaires représentés par les défauts de non-linéarité de réponse de la chaîne complète et par des défauts géométriques de non-linéarités spatiale et temporelle dues aux éléments en amont de la caméra de télévision (8), ces données complémentaires étant stockées dans une quatrième (19B) et cinquième mémoire (19A) respectivement.

2. Système selon la revendication 1 et dans lequel les circuits de gestion et de calcul comportent un processeur (18) et une base de temps (20), caractérisé en ce que les données de non-linéarités géométriques sont obtenues: en appliquant dans un premier temps un éclairement uniforme à l'entrée de la fente qui comporte une pluralité N de voies et en identifiant avec le processeur, par analyse des données stockées dans la mémoire d'image (11), les positions réelles en X, Y des lignes lumineuses (C1 à CN) correspondantes tracées sur la matrice détectrice (8A) de la caméra de télévision (8); puis en appliquant un même signal périodique sur les N entrées et en analysant par le processeur sa déformation le long desdites lignes dont les positions sont connues; enfin en calculant avec le processeur, pour chaque voie un polynôme correspondant pour chaque ligne et le stocker dans la cinquième mémoire (19A), en sorte d'effectuer en exploitation ultérieure des corrections de nonlinéarités correspondant à l'enregistrement stocké dans la mémoire d'image (11).

3. Système selon la revendication 2, caractérisé en ce que les données de non-linéarité de réponse sont établies en procédant à l'enregistrement dans la mémoire d'image (11) des réponses des N voies à un même signal d'éclairement donné, et en changeant la valeur de ce signal d'éclairement une pluralité L de fois de manière à couvrir régulièrement la dynamique du système et obtenir finalement L lignes enregistrées par chaque voie, le processeur (18) calculant la valeur moyenne de chaque ligne pour obtenir L valeurs permettant de déterminer la réponse de la voie correspondante par un polynôme dont les données sont stockées dans la quatrième mémoire (19B).

4. Système selon la revendication 2 ou 3, caractérisé en ce que la mémoire d'image (11) est utilisée dans un premier temps à l'écriture pour enregistrer les données détectées de non-uniformité de noir, de non-uniformité de réponse et de défauts locaux par application de signal vidéo à travers le convertisseur analogique-digital (29) lequel est cadencé (SH) par le circuit de base de temps (20) qui commande également l'adressage (SA) et l'écriture (SE) dans la mémoire (11), puis dans un deuxième temps à la lecture pour transférer ces données dans la mémoire (23, 24, ou 25) correspondante, le processeur déterminant, dans le cas de la non-uniformité de réponse, le terme correctif multiplicateur et, dans le cas des défauts locaux, les élément défectueux.

5. Système selon l'une quelconque des revendications 2 à 4, caractérisé en ce que la troisième mémoire (24) est connectée au convertisseur analogique-numérique (29) par l'intermédiaire d'un circuit porte ET (28) lequel est connecté par une autre entrée au processeur (18) et que le convertisseur comporte en sortie un registre tampon (RB) pour prélever la valeur précédente en cas d'élément défectueux.

6. Système selon l'une quelconque des revendication 2 à 5, caractérisé en ce qu'il comporte un commutateur (22) en sortie du multiplicateur (30) pour connecter directement le signal vidéo numérique corrigé vers un dispositif de visualisation en temps réel (14-13).

7. Système selon l'une quelconque des revendications 2 à 5, caractérisé en ce que le microprocesseur (18) est connecté via un coupleur entrée-sortie à une unité d'exploitation extérieure (17) pour transmettre les données de la mémoire d'image (11) après correction complémentaires des défauts de géométrie et de non-linéarité.

8. Système selon la revendication 7, caractérisé en ce que la chaîne réceptrice comporte un circuit d'interface (1) à N entrées et N sorties lumineuses, des moyens optiques (2) pour ramener les N sorties juxtaposées selon une fente, la caméra à fente (3) recevant ces N sorties juxtaposées, et un couplage optique de la caméra à fente à une caméra de télévision en circuit solide (8) par l'intermédiaire le cas échéant d'un intensificateur d'image (7), la caméra TV comportant une matrice en dispositif à transfert de charges (8A) et des circuits de préamplification et de lecture (8B).

## Patentansprüche

1. System zur Erfassung und Analyse schneller Signale, unter Verwendung einer Schlitz-Kamera, die einer Festkörper-Fernsehkamera vorausgeht, und mit einer Korrekturvorrichtung für das erfasste Videosignal, wobei dieses Signal zu einer Verarbeitungsschaltung übertragen wird, die Mittel zur Analog/Digital-Umsetzung und Digital/Analog-Umsetzung, zur Speicherung, zur Steuerung und zur Berechnung, zur Subtraktion und Multiplikation enthält, um die Schwarzwert-Gleichförmigkeitsfehler zu korrigieren, örtliche Fehler zu korrigieren und Ansprech-Ungleichförmigkeitsfehler zu korrigieren, wobei die Schwarzwert-Korrektur durch analoge Subtraktion in einer Subtrahierschaltung erfolgt, der andererseits das Videosignal der Fernsehkamera sowie Korrekturdaten über die Schwarzwert-Ungleichförmigkeit aus einem ersten Speicher zugeführt werden, wobei die Korrektur der örtlichen Fehler im Falle eines korrekten Elementes der Detektormatrix durch Freigabe und im Falle eines defekten Elementes durch Abgreifen des Signals erfolgt, das dem vorausgehenden Element entspricht, wobei ferner die Korrektur der Ansprech-Ungleichförmigkeit durch Berechnung eines Proportionalitätskoeffizienten und Abspeichern dieser Daten in einem zweiten Speicher sowie durch Multiplikation des entsprechenden Korrekturtermes mit einem Schwarzwert-korrigierten Videosignal erfolgt; dadurch gekennzeichnet, dass der Ausgang der Subtrahierschaltung (26) mit der Multiplizierschaltung (30) über einen Analog/Digital-Umsetzer (29) verbunden ist, der ein Freigabesignal für die örtlichen Fehler empfängt, die in einem dritten Speicher (24) abgespeichert sind, wobei die Ansprech-Ungleichförmigkeits-Korrektur digital in der Multiplizierschaltung (30) erfolgt, welche über einen digitalen Ausgang das korrigierte Videosignal an einen Bildspeicher (11) abgibt, worin es gespeichert wird, wobei Steuer- und Rechenmittel (12) verwendet werden, um aus den im Bildspeicher abgespeicherten Daten komplementäre Daten für die Korrektur von Fehlern zu erzeugen, welche durch Ansprech-Nichtlinearitäts-Fehler der vollständigen Kette und durch geometrische räumliche und zeitliche Nichtlinearitätsfehler dargestellt werden, die auf Elemente zurückgehen, welche vor der Fernsehkamera (8) gelegen sind, wobei diese komplementären Daten in einem vierten (19B) bzw. fünften (19A) Speicher abgespeichert werden.

2. System nach Anspruch 1, bei welchem die Schaltung zur Steuerung und Berechnung einen Prozessor (18) und eine Zeitbasis (20) enthalten, dadurch gekennzeichnet, dass die geometrischen Nichtlinearitätsdaten gewonnen werden, indem: in einer ersten Zeitphase eine gleichförmige Beleuchtung auf der Eintrittsseite des Schlitzes vorgenommen wird, der eine Merzahl von N Wegen aufweist, und mittels des Prozessors durch Analyse der in dem Bildspeicher (11) abgespeicherten Daten die reellen Positionen der entsprechenden N Lichtzeilen (C1 bis CN) als Koordinaten X, Y bestimmt werden, wobei diese Lichtzeilen über die Detektormatrix (8A) der Fernsehkamera (8) gezeichnet werden; indem dann dasselbe periodische Signal an die N Eingänge angelegt wird und mittels des Prozessors seine Verformung entlang den genannten Zeilen, deren Positionen bekannt sind, analysiert wird; und schliesslich mittels des Prozessors für jeden Weg ein entsprechendes Polynom für jede Zeile berechnet wird und in dem fünften Speicher (19A) abgespeichert wird, so dass eine anschliessende Auswertung der Nichtlinearitätskorrekturen erfolgt, die der in dem Bildspeicher (11) abgespeicherten Aufzeichnung entspricht.

3. System nach Anspruch 2, dadurch gekennzeichnet, dass die Ansprech-Nichtlinearitäts-Daten erzeugt werden, indem in dem Bildspeicher (11) die Ansprechwerte der N Wege für dasselbe gegebene Beleuchtungssignals gespeichert werden und der Wert dieses Beleuchtungssignal L-mal verändert wird, so dass regelmässig die Dynamik des Systems überdeckt wird und schliesslich L aufgezeichnete Zeilen für jeden Weg erhalten werden, wobei der Prozessor (18) den Mittelwert jeder Zeile berechnet, um L Werte zu gewinnen, die es ermöglichen, das Ansprechverhalten des entsprechenden Weges über ein Polynom zu bestimmen, dessen Daten in dem vierten Speicher (19B) abgespeichert sind.

4. System nach Anspruch 2 oder 3, dadurch gekennzeichnet, dass der Bildspeicher (11) in einer ersten Zeitphase im Schreibbetrieb verwendet wird, um die erfassten Schwarzwert-Ungleichförmigkeitsdaten, die Ansprech- Ungleichförmigkeitsdaten und die Daten über örtliche Fehler aufzuzeichnen, durch Anlegen des Videosignals über den Analog/Digital-Umsetzer (29), der durch die Zeitbasis (20) getaktet (SH) wird, welche gleichfalls die Adressierung (SA) und das Einschreiben (SE) in den Speicher (11) steuert, woraufhin in einer zweiten Phase ein Lesebetrieb folgt, um diese Daten in den entsprechenden Speicher (23, 24 oder 25) zu überführen, wobei der Prozessor im Falle der Ansprech-Ungleichförmigkeit der Korrektur-Multiplikationsterm und im Falle von örtlichen Fehlern die fehlerhaften Elemente bestimmt.

5. System nach einem der Ansprüche 2 bis 4, dadurch gekennzeichnet, dass der dritte Speicher (24) an den Analog/Digital-Umsetzer (29) über eine AND-Schaltung (28) angeschlossen ist, welche mit einem weiteren Eingang an den Prozessor (18) angeschlossen ist, und dass der Umsetzer ausgangsseitig ein Pufferregister (RB) aufweist, um im Falle von fehlerhaften Elementen den vorausgehenden Wert anzugreifen.

6. System nach einem der Ansprüche 2 bis 5, dadurch gekennzeichnet, dass es einen Umschalter (22) am Ausgang des Multiplizierers (30) aufweist, um das digitalisierte korrigierte Videosignal direkt in Realzeit an eine Anzeigevorrichtung (14-13) anzuschalten.

7. System nach einem der Ansprüche 2 bis 5, dadurch gekennzeichnet, dass der Mikroprozessor (18) über einen Eingangs/Ausgangs-Koppler mit einer externen Auswerteeinheit (17) verbunden ist, um die Daten aus dem Bildspeicher (11) nach komplementärer Korrektur der Geometrie- und Nichtlinearitätsfehler zu übertragen.

8. System nach Anspruch 7, dadurch gekennzeichnet, dass die Empfängerkette eine Schnittstellenschaltung (1) mit N Eingängen und N Lichtausgängen, optische Mittel (2), um die N nebeneinanderliegenden Ausgänge entlang einem Schlitz auszurichten, eine Schlitz-Kamera (3), welche diese N nebeneinanderliegenden Ausgänge als Eingangsgrössen aufnimmt, und eine optische Kopplung der Schlitz-Kamera mit einer Festkörper-Fernsehkamera (8), gegebenenfalls über einen Bildverstärker (7), enthält, wobei die Fernsehkamera eine Matrix vom Typ einer mit Ladungsverschiebung arbeitenden Vorrichtung (8A) sowie Vorverstärkungs- und Leseschaltungen (8B) aufweist.

## Claims

1. A system for the acquisition and analysis of fast signals, utilizing a camera with a slit preceding a solid state television camera, and equipped with a correcting device for the detected video signal, the said signal being transmitted to a processing circuit comprising means for analog to digital and digital to analog conversion, for storing, for management and calculation, for subtraction and for multiplication in order to correct black non-uniformity faults, local faults and faults of non-uniformity of response, the black correction being performed by analog subtraction in a subtracting circuit receiving the video signal of the television camera and the black non-uniformity correction data stored in a first memory, the correction of local faults being performed by release in the case of a correct element of the detecting matrix and by sampling the signal corresponding to the preceding element if the element is defective, the correction of non-uniformity of response being performed by calculation of a proportionality coefficient and storing of these data in a second memory and by multiplication of the corresponding correcting term with a corrected video signal for black; the said system being characterized in that the output of the subtracting circuit (26) is connected with the multiplying circuit (30) via an analog to digital converter (29) which receives a release signal for local faults stored in a third memory (24), the correction of non-uniformity of response being performed digitally in the said multiplying circuit (30), which via a digital output supplies the corrected video signal to an image memory (11), where it is stored, the management and calculation means (12) being utilized in order to elaborate, on the basis of the data stored in the image memory, data for the correction of the complementary faults represented by the nonlinearity response faults of the complete chain and by geometrical nonlinearity spatial and temporal faults due to elements on the input side of the television camera (8), these complementary data being stored in a fourth and fifth memory (19B and, respectively, 19A).

2. The system as claimed in claim 1 and in which the management and calculation circuits comprises a processor (18) and a time base (30) characterized in that the nonlinearity geometrical data are obtained as follows: by the application in a first time of uniform illumination at the entry of the slit which comprises a plurality N of paths and identifying with the processor, by analysis of the data stored in the image memory (11), the real positions X and Y of the N luminous corresponding lines (C1 to CN) traced on the detecting matrix (8A) of the television camera (8); by applying an identical periodical signal to the N inputs and analysing with the processor its deformation along the said lines whose positions are known; then by calculating with the processor, for each path, a corresponding polynomial for each line and storing it in the fifth memory (19A) so as to perform during later use nonlinearity corrections corresponding to the recording stored in the image memory (11).

3. The system as claimed in claim 2, characterized in that the response nonlinearity data are established by proceeding to recording, in the image memory (11), the responses of the N paths at an identical given illumination signal, and by changing the value of this illumination signal a plurality L of times in such a manner as to regularly cover the dynamics of the system and to finally obtain L recorded lines recorded by each path, the processor (18) calculating the mean value of each line in order to obtain L values permitting the determination of the response of the corresponding path by a polynomial, whose data are stored in the fourth memory (19B).

4. The system as claimed in claim 2 or claim 3, characterized in that the image memory (11) is utilized in a first writing time for recording the black non-uniformity, the response and local fault detected non-uniformity data by the application of the video signal via the analog digital converter (29) which is clocked (SH) by time base circuit (2) which also orders the addressing (SA) and the writing (SE) in the memory (11), then in a second reading time in order to transfer these data into the corresponding memory (23, 24 or 25), the processor determining, if there is a non-uniformity of response, the multiplying correction term and, in the case of local faults, the defective elements.

5. The system as claimed in any one of the claims 2 through 4, characterized in that the third memory (24) is connected with the analog digital converter (29) by the intermediary of an AND gate circuit (29), which is connected via another input with the processor (18) and in that the converter comprises on the output side a buffer memory (RB) in order to sample the preceding value in the case of defective elements.

6. The system as claimed in any one of the claims 2 through 5, characterized in that it comprises a switch (22) at the output of the multiplier (30) which directly connects the corrected video digital signal with a real time viewing device (14-13).

7. The system as claimed in any one of the claims 2 through 5, characterized in that the microprocessor (18) is connected via an input output coupler with an external utilization device (17) for transmitting the data from the image memory (11) after complementary correction of faults in geometry and nonlinearity.

8. The system as claimed in claim 7, characterized in that the receiving chain comprises an interface ciruit (1) with N inputs and N luminous outputs, optical means (2) to place the N juxtaposed outputs in alignment with a slit, the slit camera (3) receiving these N juxtaposed outputs, and an optical coupler between the slit camera and a television camera with a solid state circuit (8) by the intermediary, in a given case of an image intensifier (7), the television camera comprising a charge transfer device matrix (8A) and preamplifying and reading circuits (8B).

EP 0 176 389 B1

# FIG_1

11

# FIG_2

$E_1$ — — — — — — — — — — — — $E_P$

$E_R$

# FIG_4

$C_1$ $C_j$ $C_{j+1}$ $C_N$

# FIG_3

$\Delta L$   T
$\Delta L$   T
  T
  T

$\Delta L1$
$\Delta L2$
$\Delta L3$

# FIG_5

# FIG_6

$V_S$

M

J

I

H

N

$V_{Sm}$

G

F

D

P

O   $E_{MAX}/8$   $E_{MAX}/2$   $E_{MAX}$   E

FIG_7

SV → CAN *29*

11

SA    SE

SH

20

FIG_8

23    11

SA
SE    SL
SD         SD

μP    18

FIG_9

SV → + − *26* → CAN │ RB *29*

27    28    30    X *30*    11

CNA

23    24    25

SA
SL

μP *18*    SE

# FIG_10

# FIG_11